# EUROPÄISCHE PATENTANMELDUNG

(11) **EP 3 534 133 A1**
(43) Veröffentlichungstag der Anmeldung: **04.09.2019**
(21) Anmeldenummer: 18159640.4
(22) Anmeldetag: 02.03.2018
(51) Int. Cl.: G01L 19/00, G01L 13/06, G01L 15/00, G01L 19/06, G01L 19/14, B22F 3/10, B29C 64/00

(54) **DRUCKSENSOR**

(71) Anmelder: Grundfos Holding A/S, 8850 Bjerringbro (DK)
(72) Erfinder: Jan Schøn, 7430 Ikast (DK); Thorsten Brorson Otte, 8830 Tjele (DK); Søren Kjeldsen, 8830 Tjele (DK)
(74) Vertreter: Patentanwälte Vollmann Hemmer Lindfeld Partnerschaft mbB

(57) **Zusammenfassung**

Die Erfindung betrifft einen Drucksensor mit einem Sensorgehäuse, wobei das Sensorgehäuse zumindest einen Sensorkörper (34) aufweist, welcher aus zumindest zwei Abschnitten (42, 44) ausgebildet ist, von welchem ein erster Abschnitt (42) ein vorgefertigtes Element ist, an welches ein zweiter Abschnitt (44) durch ein generatives Fertigungsverfahren (3D-Druck) einteilig angeformt ist, sowie ein Pumpenaggregat mit einem solchen Drucksensor und ein Verfahren zum Herstellen eines solchen Drucksensors.

## Beschreibung

Die Erfindung betrifft einen Drucksensor mit einem Sensorgehäuse.

Derartige Drucksensoren können in verschiedenen Maschinen zur Druckerfassung eingebaut werden, insbesondere in Pumpenaggregate wie Kreiselpumpenaggregate. Dort können sie besonders bevorzugt als Differenzdrucksensoren ausgebildet sein, um den Differenzdruck zwischen Ein- und Ausgang der Pumpe zu erfassen. Ein solcher Drucksensor muss in seinem Inneren Kanäle aufweisen, um die zu messenden Drücke an das eigentliche Messelement heranzuführen. Dieses Messelement, beispielsweise eine verformbare Membran, mit Verformungs- oder Dehnungsmesselementen, ist vorzugsweise an einer Leiterplatte im Inneren des Sensorgehäuses angeordnet. Es können auch andere Messprinzipien, wie beispielsweise piezoelektrische Messprinzipien, zur Anwendung kommen.

Wenn ein solcher Drucksensor in eine Maschine wie ein Pumpenaggregat eingesetzt ist, ist es erstrebenswert, dass der Drucksensor die Strömung im Inneren der Maschine möglichst wenig beeinträchtigt. Insofern ist gerade bei in die Strömungswege der Maschine hineinragenden Teilen des Drucksensors eine möglichst glatte strömungsoptimierte Außengestaltung wünschenswert. Gleichzeitig müssen jedoch im Inneren gegebenenfalls komplexe Kanalstrukturen ausgebildet werden.

Vor diesem Hintergrund ist es Aufgabe der Erfindung, einen Drucksensor bereitzustellen, welcher kostengünstig zu fertigen ist und dennoch das Ausbilden komplexer Strukturen in seinem Inneren ermöglicht. Ferner ist es Aufgabe der Erfindung, ein Verfahren zum Ausbilden eines solchen Drucksensors bereitzustellen.

Diese Aufgabe wird gelöst durch einen Drucksensor mit den in Anspruch 1 angegebenen Merkmalen sowie durch ein Verfahren mit den in Anspruch 15 angegebenen Merkmalen. Bevorzugte Ausführungsformen ergeben sich aus den zugehörigen Unteransprüchen, der nachfolgenden Beschreibung sowie den beigefügten Figuren.

Der erfindungsgemäße Drucksensor weist ein Sensorgehäuse auf, in welchen insbesondere die erforderlichen elektrischen bzw. elektronischen Komponenten, insbesondere die eigentlichen Messelemente, angeordnet sind. Erfindungsgemäß weist das Sensorgehäuse zumindest einen Sensorkörper auf, welcher aus zwei Abschnitten ausgebildet ist. Dabei ist der Sensorkörper bevorzugt dasjenige Element, in welchem die Druckaufnahmeöffnung oder die Druckaufnahmeöffnungen, durch welche ein Fluid, dessen Druck zu erfassen ist, in das Innere des Sensorgehäuses eintreten kann, gelegen sind. Der Sensorkörper kann insbesondere der Teil des Drucksensors sein, welcher zum Einsetzen in ein Aggregat oder eine Maschine, wie beispielsweise ein Pumpenaggregat, vorgesehen ist.

Von den zwei Abschnitten des zumindest einen Sensorkörpers ist ein erster Abschnitt als ein vorgefertigtes Element ausgebildet. Dies kann ein Element sein, welches z. B. in herkömmlicher Weise, beispielsweise in einem Urformprozess und/oder in einem spanenden Fertigungsprozess in einem ersten Fertigungsschritt gefertigt worden ist. Der zweite Abschnitt ist in einem generativen Fertigungsverfahren (3D-Druck) einteilig an diesen ersten Abschnitt angeformt, d. h. nach Fertigstellung des ersten Abschnittes direkt an diesen angedruckt worden. Dieser erfindungsgemäße Hybrid-Aufbau des Sensorgehäuses bzw. dessen zumindest einen Sensorkörpers hat den Vorteil, dass der erste Abschnitt kostengünstig in herkömmlicher Weise gefertigt werden kann. Dies ist insbesondere ein Abschnitt, welcher in seinem Inneren keine komplexen Strukturen aufweist, sodass er durch herkömmliche Gussverfahren und/oder spanende Fertigungsverfahren herstellbar ist. Darüber hinaus lässt sich die Außenkontur dieses ersten Abschnittes auf einfache Weise strömungsgünstig bearbeiten, beispielsweise schleifen oder polieren, um, wenn dieser Sensorkörper in einen Strömungskanal zur Druckmessung hineinragt, die Strömungsverluste zu minimieren. Der zweite Abschnitt hingegen, welcher in einem additiven bzw. generativen Verfahren direkt an den ersten Abschnitt angefügt wird, ermöglicht es, in seinem Inneren sehr komplexe Strukturen, insbesondere Kanäle auszubilden. D. h., derjenige Teil des Sensorkörpers, welcher derartig komplexe Strukturen benötigt, wird generativ gefertigt, was gerade die Ausbildung von gewinkelten, mit Hinterschneidungen versehenen inneren Strukturen ermöglicht. Dadurch, dass nur derjenige Abschnitt, welcher solche Strukturen aufweist, im generativen Fertigungsverfahren gefertigt wird, kann darüber hinaus die Fertigungszeit des Sensorkörpers minimiert werden.

Besonders bevorzugt sind der erste und der zweite Abschnitt des Sensorkörpers aus Metall, weiter bevorzugt aus rostfreiem Stahl gefertigt. Der erste Abschnitt kann beispielsweise aus einem Rundstahl spanend ausgebildet werden, während der zweite Abschnitt dann in einem generativen Verfahren an diesen ersten Abschnitt angeformt wird. Es ist jedoch auch möglich, zuvor den ersten Abschnitt ebenfalls in einem urformenden Fertigungsverfahren, beispielsweise im Guss-Verfahren oder ebenfalls generativ auszubilden, wobei vor Anbringen des zweiten Abschnittes eine weitere Bearbeitung wie z. B. eine spanende Bearbeitung erfolgen kann. Anstatt den ersten und den zweiten Abschnitt aus Metall zu fertigen, wäre auch eine Fertigung beispielsweise aus Kunststoff möglich.

Der erste und der zweite Abschnitt des Sensorkörpers sind bevorzugt durch den generativen Fertigungsvorgang bzw. Druckvorgang miteinander verschweißt. D. h., so wird vorzugsweise die beim Aufschmelzen des aufzubringenden Materials benötigte Hitze ausgenutzt, um gleichzeitig die ersten Schichten des zweiten Abschnittes direkt an den ersten Abschnitt anzuschweißen. So kann die Verbindung direkt im Druckprozess realisiert werden, was eine schnelle und kostengünstige Fertigung ermöglicht.

Wie oben beschrieben, ist der Sensorkörper gemäß einer bevorzugten Ausführungsform zum Einführen in einen Raum, in dessen Inneren ein Druck erfasst werden soll, ausgebildet. So kann der Sensorkörper beispielsweise als Messfinger ausgebildet sein, welcher durch eine Öffnung in das Innere eines strömungsführenden Bauteils, insbesondere in das Innere eines Pumpenaggregates, eingeführt wird.

Der Sensorkörper kann darüber hinaus vorzugsweise Befestigungselemente, wie beispielsweise ein Gewinde, aufweisen, mit welchem er in die Öffnung eines strömungsführenden Bauteils, wie eines Pumpenaggregates, eingeschraubt werden kann. Ein solches Gewinde kann insbesondere an dem zweiten Abschnitt besonders bevorzugt direkt in einem generativen Fertigungsverfahren ausgebildet werden. Weiter bevorzugt weist das Sensorgehäuse und insbesondere der zumindest eine Sensorkörper eine Dichtfläche auf, an welcher eine Dichtung zum Abdichten zur Anlage kommen kann.

Der erste Abschnitt erstreckt sich weiter bevorzugt von dem zweiten Abschnitt weg und es erstreckt sich ein Kanalabschnitt eines ersten Fluidkanals durch den ersten Abschnitt. Dieser Kanalabschnitt ist weiter bevorzugt zu einem dem zweiten Abschnitt abgewandten Ende hin geöffnet. So weist der erste Abschnitt in seinem Inneren einen ersten Fluidkanal auf, welcher sich bevorzugt in den zweiten Abschnitt des Sensorkörpers hinein erstreckt. D. h., bevorzugt schließt sich in dem zweiten Abschnitt des Sensorkörpers ein bei der generativen Fertigung ausgebildeter Kanalabschnitt an einen Kanalabschnitt an, welcher in dem ersten Abschnitt des Sensorkörpers zuvor beispielsweise spanend ausgebildet worden ist.

Gemäß einer weiteren bevorzugten Ausführungsform erstreckt sich der genannte Kanalabschnitt des ersten Fluidkanals ebenfalls durch den zweiten Abschnitt des Sensorkörpers. So kann sich der Kanalabschnitt des ersten Fluidkanals durch den zweiten Sensorkörper hindurch, beispielsweise zu einem Messelement, welches im Inneren des Sensorgehäuses angeordnet ist, hin erstrecken.

Gemäß einer weiteren bevorzugten Ausführungsform der Erfindung ist in dem zweiten Abschnitt des Sensorkörpers ein zweiter Fluidkanal ausgebildet, welcher an einem ersten Ende in einer Druckaufnahmeöffnung mündet. Diese Druckaufnahmeöffnung ist weiter bevorzugt von der Öffnung des ersten Fluidkanals in dem ersten Abschnitt des Sensorkörpers beabstandet. So können die Öffnungen bzw. Druckaufnahmeöffnungen des ersten und des zweiten Fluidkanals dazu dienen, Drücke an zwei voneinander beabstandeten Positionen aufzunehmen, um so eine Differenzdruckmessung durch ein Messelement im Inneren des Sensorgehäuses, zu dem die Fluidkanäle hinführen, zu ermöglichen. Beispielsweise kann der Sensorkörper so in ein Pumpenaggregat eingesetzt werden, dass eine Druckaufnahmeöffnung an der Druck- bzw. Ausgangsseite des Pumpenaggregates liegt, während die andere Druckaufnahmeöffnung an der Eingangsseite bzw. Saugseite des Pumpenaggregates liegt.

Der zweite Fluidkanal weist besonders bevorzugt einen gewinkelten oder mäanderförmigen Verlauf auf und/oder hat zumindest eine Querschnittsänderung. So kann der zweite Fluidkanal eine komplexe Form aufweisen, welche in verschiedener Hinsicht optimiert sein kann. So kann der Fluidkanal so optimiert sein, dass Druckwellen bzw. Druckimpulse in dem Fluidkanal gedämpft werden, um die Beschädigung eines Messelementes, welches sich an den Fluidkanal anschließt, zu verhindern. Auch kann eine Formgebung dahingehend optimiert werden, dass Kavitation im Bereich eines Messelementes verringert wird, indem Unterdruckimpulse in der Leitung minimiert werden. Dies ist insbesondere dann der Fall, wenn der Fluidkanal eine Verbindung beispielsweise zu einer Saugseine eines Pumpenaggregates herstellt. Die Ausbildung durch ein generatives Fertigungsverfahren ermöglicht beliebige komplexe Formen des Fluidkanals, beispielsweise mehrfach gewinkelte Verläufe, Querschnittserweiterungen und Verringerungen oder ringförmige Kanäle, sodass beispielsweise Ausgleichsvolumen oder Dämpfungsvolumen im Inneren des Fluidkanals geschaffen werden, um Druckschwankungen zum Schutz eines Messelementes zu dämpfen bzw. zu minimieren.

Der zweite Fluidkanal endet mit einem zweiten Ende vorzugsweise in dem zweiten Abschnitt des Sensorkörpers an einer Messelementaufnahme, an welcher ein Messelement, beispielsweise in Form einer Membran, anliegt. Dabei kann an der Messelementaufnahme vorzugsweise eine Dichtung vorgesehen sein, welche den Übergang zwischen Messelement und Messelementaufnahme nach außen abdichtet. Die Ausgestaltung der Messelementaufnahme in dem zweiten Abschnitt des Sensorkörpers, welcher generativ gefertigt wird, hat den Vorteil, dass so auf einfache Weise auch die Messelementaufnahme direkt in dem Druckprozess mit ausgebildet werden kann.

Gemäß einer weiteren bevorzugten Ausführungsform endet der Kanalabschnitt des ersten Fluidkanals in dem zweiten Abschnitt des Sensorkörpers entweder an einer Messelementaufnahme, an welcher ein Messelement anliegt, oder an einer Schnittstelle, an welcher ein zweiter Kanalabschnitt in einem weiteren Gehäuseteil mit dem ersten Fluidkanal in dem Sensorkörper verbunden ist. Eine Messelementaufnahme kann in gleicher Weise ausgebildet sein, wie sie oben anhand des zweiten Fluidkanals beschrieben wurde. D. h., hier kann beispielsweise unter Verwendung einer zwischenliegenden Dichtung eine Membran eines Messelementes dichtend zur Anlage gebracht werden. Die Ausbildung einer Schnittstelle ermöglicht es, an dieser Stelle ein weiteres Gehäuseteil, vorzugsweise ebenfalls unter Zwischenschaltung einer Dichtung anzufügen, durch welches der Fluidkanal über einen zweiten Kanalabschnitt weitergeführt wird. Dies kann beispielsweise ein Gehäuseteil sein, in welchem der Fluidkanal an die Rückseite eines Messelementes geführt wird, welches an einer Messelementaufnahme des zweiten Fluidkanals anliegt, um eine Differenzdruckmessung zwischen den Drücken in den beiden genannten Fluidkanälen zu ermöglichen.

So ist der zweite Kanalabschnitt des ersten Fluidkanals weiter bevorzugt in einem mit dem Sensorkörper verbundenen Gehäusekörper ausgebildet. Dies kann beispielsweise ein Gehäusekörper sein, welcher gemeinsam mit dem Sensorkörper das Sensorgehäuse bildet und insbesondere in seinem Inneren einen Aufnahmeraum definiert, in welchem die erforderlichen elektrischen bzw. elektronischen Bauteile, beispielsweise eine Leiterplatte mit einem oder mehreren Messelementen positioniert werden können. Es kann jedoch auch ein spezieller Gehäusekörper lediglich für den genannten Fluidkanal vorgesehen werden.

Der erste Fluidkanal endet bevorzugt an einer Messelementaufnahme, an welcher ein Messelement anliegt. Dies kann eine Messelementaufnahme mit einem Messelement sein, wie sie vorangehend beschrieben wurden.

Die Messelementaufnahme, an welcher der erste Fluidkanal endet, liegt gemäß einer weiteren bevorzugten Ausführungsform vorzugsweise in dem mit dem Sensorkörper verbundenen Gehäusekörper, wie er vorangehend beschrieben wurde. Dieser Gehäusekörper kann weiter bevorzugt ebenfalls in einem generativen Fertigungsverfahren (3D-Druck) ausgebildet sein, sodass auf einfache Weise auch eine komplexe Gestaltung des Kanalverlaufes im Inneren des Gehäusekörpers und die Ausbildung einer sich anschließenden Messelementaufnahme realisiert werden kann.

Gemäß einer besonders bevorzugten Ausführungsform der Erfindung liegt die Messelementaufnahme des ersten Fluidkanals, d. h., an welcher der erste Fluidkanal endet, der Messelementaufnahme des zweiten Fluidkanals, d. h. der Messelementaufnahme, an welcher der zweite Fluidkanal endet, gegenüber, wobei an den beiden Messelementaufnahmen ein Differenzdruck-Messelement gelegen ist. D. h. das Differenzdruck-Messelement liegt vorzugsweise zwischen den beiden einander gegenüberliegenden Messelementaufnahmen und ist besonders bevorzugt zwischen diesen eingeklemmt bzw. eingespannt. Das Differenzdruck-Messelement kann somit von zwei einander abgewandten Seiten mit Druck beaufschlagt werden, um den Differenzdruck zwischen den beiden Messelementaufnahmen zu bestimmen. Das Differenzdruck-Messelement kann beispielsweise eine Membran sein, deren Auslenkung erfasst wird.

Neben dem vorangehend beschriebenen Drucksensor ist Gegenstand der Erfindung insbesondere auch ein Pumpenaggregat mit einem solchen Drucksensor, wie er vorangehend beschrieben wurde. Dabei ist der Drucksensor bevorzugt in zumindest einem Strömungsweg des Pumpenaggregates zur Druckmessung angeordnet. Besonders bevorzugt kann es sich bei dem Pumpenaggregat um ein Kreiselpumpenaggregat handeln. Ferner kann der Drucksensor gemäß einer bevorzugten Ausführungsform ein Differenzdrucksensor sein, welcher die Druckdifferenz zwischen Saug- und Druckseite des Pumpenaggregates bestimmt.

Gemäß einer bevorzugten Ausführungsform ist der Drucksensor so ausgebildet, dass der Sensorkörper einen Mess-Finger bildet, welcher durch ein Loch in das Innere des Pumpengehäuses eingesetzt ist. Dabei kann der Sensorkörper vorzugsweise durch eine Gewindeverbindung oder eine andere geeignete Verbindung, wie beispielsweise eine Bajonett-Verbindung, in dem Pumpengehäuse fixiert werden. Der Sensorkörper weist bevorzugt zwei Druckaufnahmeöffnungen, wie sie oben beschrieben wurden, auf, welche so voneinander beabstandet sind, dass die eine Druckaufnahmeöffnung in einem saugseitigen Strömungsweg und die andere Druckaufnahmeöffnung in einem druckseitigen Strömungsweg des Pumpenaggregates gelegen ist, um den Differenzdruck zwischen beiden bestimmen zu können.

Ferner ist Gegenstand der Erfindung ein Verfahren zum Herstellen eines Drucksensors, bevorzugt eines Drucksensors, wie er vorangehend beschrieben wurde. So wird auch hinsichtlich der bevorzugten Verfahrensmerkmale auf die vorangehende Beschreibung verwiesen. Vorangehend beschriebene Verfahrensschritte sind gleichzeitig bevorzugte Ausgestaltungen des erfindungsgemäßen Verfahrens, wobei diese Verfahrensschritte unabhängig oder in Kombination miteinander verwirklicht sein können.

Gemäß dem erfindungsgemäßen Verfahren wird zunächst ein erster Abschnitt eines Sensorkörpers als vorgefertigtes Bauteil bereitgestellt. Anschließend wird in einem zweiten Verfahrensschritt ein zweiter Abschnitt des Sensorkörpers durch ein generatives Fertigungsverfahren direkt an dem ersten Abschnitt generiert, wobei es zu einer Verbindung von dem zweiten mit dem ersten Abschnitt kommt. Mittels des generativen Verfahrens werden in dem zweiten Abschnitt vorzugsweise zumindest ein Fluidkanal, weiter bevorzugt zumindest zwei Fluidkanäle, ausgebildet. Besonders bevorzugt wird dabei ein Fluidkanal ausgebildet, welcher sich an den Abschnitt eines Fluidkanals in dem ersten Fluidkanal anschließt, sodass ein durchgehender Fluidkanal geschaffen wird.

Der erste Abschnitt, welcher ein vorgefertigtes Bauteil bildet, wird vorzugsweise in einem urformenden und/oder spanenden Fertigungsprozess hergestellt. Dadurch, dass nur der zweite Abschnitt mittels eines additiven bzw. generativen Fertigungsverfahrens (3D-Druck) gefertigt wird, kann die Herstellungszeit verkürzt werden, da nicht das gesamte Bauteil in einem langwierigen Druck-Prozess hergestellt werden muss. Vielmehr kann lediglich derjenige Abschnitt des Sensorkörpers generativ gefertigt werden, welcher komplexe Strukturen beinhaltet, welche in anderer Weise nicht oder nur schwer auszubilden wären. Dadurch, dass der zweite Abschnitt direkt an den ersten Abschnitt angedruckt wird, wird eine stoffschlüssige dauerhafte Verbindung zwischen beiden Abschnitten ohne einen weiteren Montagevorgang geschaffen. Als generatives Fertigungsverfahren kann beispielsweise selektives Lasersintern zum Einsatz kommen.

Nachfolgend wird die Erfindung beispielhaft anhand der beigefügten Figuren beschrieben. In diesen zeigt:
- Fig. 1: eine Schnittansicht eines mehrstufigen Kreiselpumpenaggregats gemäß der Erfindung,
- Fig. 2: eine Schnittansicht eines Basis- oder Fußgehäuses eines mehrstufigen Kreiselpumpenaggregates mit einem darin angeordneten Drucksensor,
- Fig. 3: eine perspektivische Explosionsansicht eines erfindungsgemäßen Drucksensors,
- Fig.4: eine perspektivische Explosionsansicht des Drucksensors gemäß Fig. 3 mit Sicht auf das Elektronikgehäuse,
- Fig. 5A: eine teilweise transparente Ansicht eines Gehäusekörpers des Drucksensors gemäß Fig. 3 und 4,
- Fig. 5B: eine Schnittansicht des Gehäusekörpers gemäß Fig. 5A,
- Fig. 6: eine Schnittansicht des Drucksensors gemäß Fig. 3 und 4,
- Fig. 7: ein erstes alternatives Ausführungsbeispiel für Fluidkanäle in einem Drucksensor,
- Fig. 8: ein zweites alternatives Ausführungsbeispiel für eine Anordnung von Fluidkanälen in einem Drucksensor,
- Fig. 9: ein drittes alternatives Ausführungsbeispiel für die Anordnung von Fluidkanälen in einem Drucksensor,
- Fig. 10: ein viertes alternatives Ausführungsbeispiel für die Anordnung von Fluidkanälen in einem Drucksensor,
- Fig. 11: eine Schnittansicht eines weiteren Ausführungsbeispiels eines Fluidkanals in einem erfindungsgemäßen Drucksensor und
- Fig. 12: eine schematische Schnittansicht eines weiteren Ausführungsbeispiels eines Fluidkanals in einem erfindungsgemäßen Drucksensor.

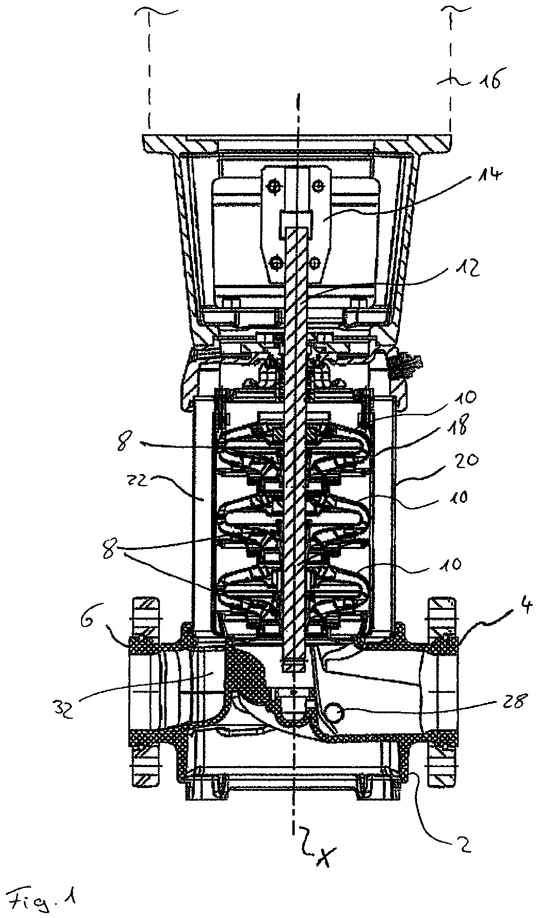

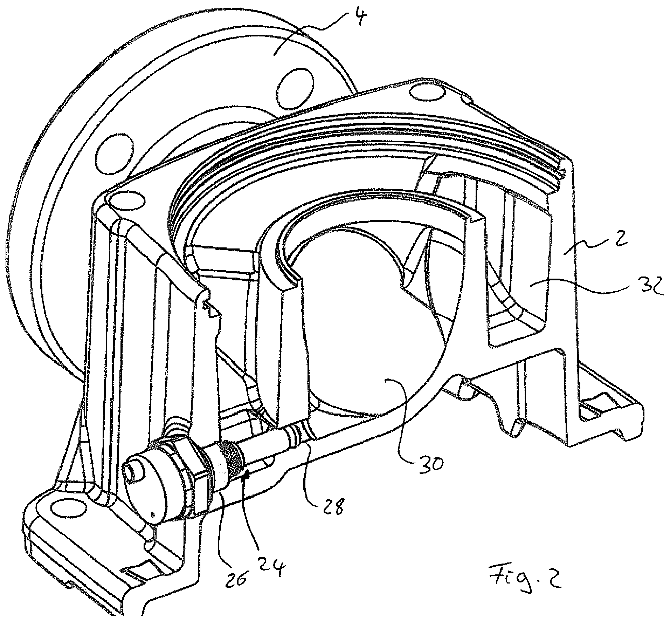

Fig. 1 zeigt in einer Schnittansicht ein mehrstufiges Kreiselpumpenaggregat als Beispiel für ein Pumpenaggregat gemäß der Erfindung, in welchem ein erfindungsgemäßer Drucksensor zum Einsatz kommt. Das gezeigte Pumpenaggregat weist ein Fuß- bzw. Basisgehäuse 2 auf, an welchem ein Einlassstutzen 4 und ein Auslassstutzen 6 ausgebildet sind. An das Basisgehäuse 2 angesetzt sind in diesem Ausführungsbeispiel drei Pumpstufen, welche jeweils aus einem Laufrad 8 und zwischenliegenden Leitapparaten 10 gebildet werden. Die Laufräder 8 sind auf einer gemeinsamen Welle 12 angeordnet, welche über eine Kupplung 14 mit einem hier nur schematisch gezeigten Antriebsmotor 16 verbunden ist. Die einzelnen Pumpenstufen sind in einem inneren rohrförmigen Gehäuse 18 gelegen, welches beabstandet von einem äußeren Gehäuse 20, welches ebenfalls rohrförmig ausgestaltet ist, umgeben ist. So wird zwischen den Gehäusen 18 und 20 ein ringförmiger Kanal 22 gebildet, welcher als Druckkanal dient und die Ausgangseite der Pumpenstufen mit dem Auslass- bzw. Druckstutzen 6 in dem Basisgehäuse 2 verbindet. Wie in Fig. 2 gezeigt, ist in dem Basisgehäuse 2 ein Drucksensor 24 angeordnet. Der Drucksensor 24 ist durch eine Öffnung 26 in der äußeren Gehäusewandung des Basisgehäuses 2 eingesetzt. Dieser Öffnung 26 gegenüberliegend ragt der Drucksensor 24 in eine Öffnung 28 in einer Wandung des im Inneren des Basisgehäuses 2 gebildeten Saugkanals 30 hinein. So erstreckt sich der Drucksensor 24 durch einen Ringraum 32 hindurch. Der Ringraum 32 schließt sich in dem Basisgehäuse 2 an den ringförmigen Kanal 22 an und stellt die Verbindung zu dem Druckstutzen 6 her. Durch die Anordnung des Drucksensors 24 in dieser Weise kann der Drucksensor 24 sowohl den druckseitigen Druck im Ringraum 32 als auch den saugseitigen Druck im Saugkanal 30 und damit den Differenzdruck zwischen Ein- und Ausgangsseite des Pumpenaggregates erfassen.

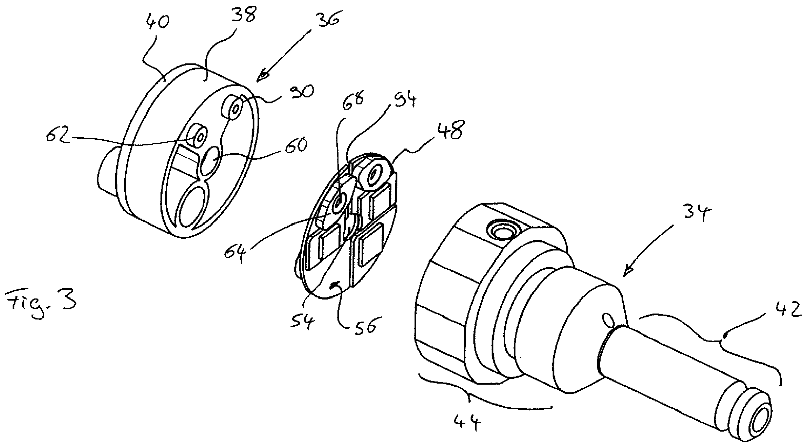

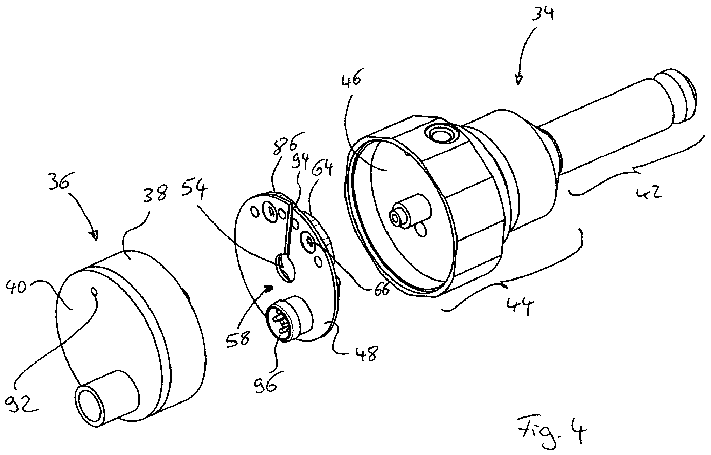

Der Aufbau des Drucksensors wird näher anhand der Fig. 3 bis 5 beschrieben. Der Drucksensor 24 besteht aus einem Sensorkörper 34 und einem Elektronikgehäuse 36. Das Elektronikgehäuse 36 weist einen Gehäusekörper 38 und einen diesen verschließenden Deckel 40 auf. Der Sensorkörper 34, und das Elektronikgehäuse 36 bilden gemeinsam ein Sensorgehäuse, welches alle wesentlichen Komponenten des Drucksensors enthält.

Der Sensorkörper 34 ist aus zwei Abschnitten 42 und 44 gebildet. Der erste Abschnitt 42 des Sensorkörpers bildet einen Sensorfinger, welcher sich, wie in Fig. 2 gezeigt, durch den Ringraum 32 in die Öffnung 28 hinein erstreckt. Der sich anschließende zweite Abschnitt 44 des Sensorkörpers grenzt an das Elektronikgehäuse 36 an. Der zweite Abschnitt 44 umschließt gemeinsam mit dem Gehäusekörper 38 einen Aufnahmeraum 46, in welchem eine Leiterplatte 48 mit der eigentlichen Messelektronik des Drucksensors angeordnet ist.

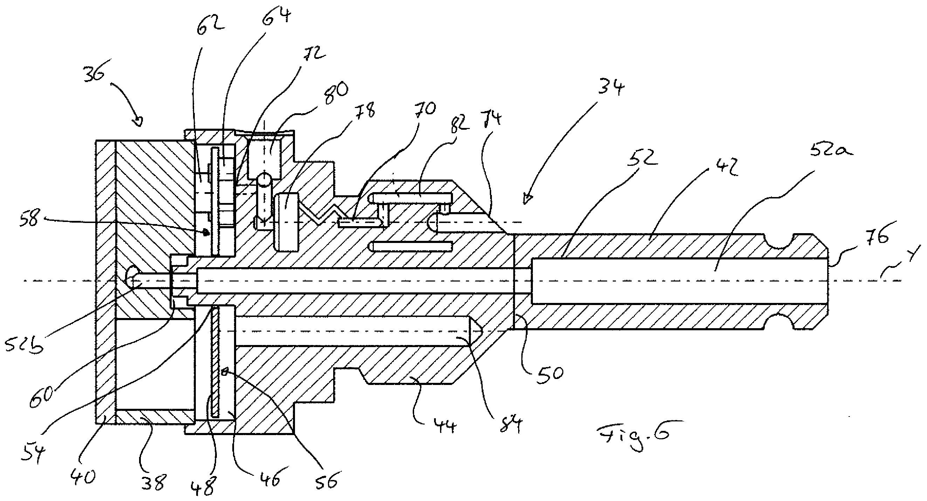

Der erste Abschnitt des Sensorkörpers 42 und der zweite Abschnitt des Sensorkörpers 44 sind in einer Verbindungsebene 50, welche in Fig. 6 dargestellt ist, miteinander verbunden. Dabei ist bei dem hier gezeigten Drucksensor der erste Abschnitt 42 im Herstellungsprozess zunächst als vorgefertigtes Bauteil bereitgestellt, beispielsweise als spanend aus einem Rundstahl gefertigtes Bauteil. Der zweite Abschnitt 44 hingegen ist in einem generativen bzw. additiven Fertigungsverfahren, das heißt im sogenannten 3D-Druck, an das vorgefertigte Bauteil, welches den ersten Abschnitt 42 bildet, angeformt. Das heißt, der zweite Abschnitt 44 ist additiv direkt auf dem ersten Abschnitt 42, welcher vorgefertigt ist, generiert worden. Dabei kommt es an der Verbindungsebene 50 zu einer Verschweißung beider Bauteile, sodass diese im Ergebnis einteilig ausgebildet sind. Im gezeigten Beispiel sind beide Teile aus demselben Material, vorzugsweise rostfreiem Edelstahl, gefertigt.

Der gesamte Sensorkörper 34 ist in seiner Längsrichtung Y von einem ersten Fluidkanal 52 durchzogen. Dabei weist der erste Fluidkanal 52 einen ersten Kanalabschnitt 52a und einen zweiten Kanalabschnitt 52b auf. Der erste Kanalabschnitt 52a erstreckt sich in dem Sensorkörper 34. Eine Verlängerung dieses Kanalabschnittes, welcher ebenfalls Teil des ersten Fluidkanals 52 ist, erstreckt sich in dem Gehäusekörper 38 als zweiter Kanalabschnitt 52b. In dem ersten Abschnitt 42 des Sensorkörpers 34 kann der erste Fluidkanal 52 beispielsweise im Bohrverfahren ausgebildet werden. In dem zweiten Abschnitt des Sensorkörpers 44 wird der erste Fluidkanal 52 direkt in der generativ gefertigten Struktur ausgebildet.

Die Leiterplatte 48 weist in ihrem Zentrum eine Ausnehmung 54 in Form eines zentralen Loches auf. Dieses dient dazu, dass sich der erste Fluidkanal 52 durch die Leiterplatte 48 hindurch erstrecken kann. Dabei ist der erste Abschnitt 52a des Fluidkanals 52 im Wesentlichen, das heißt zu seinem größten Teil, an einer ersten distalen Seite 56 der Leiterplatte 48 gelegen. Die erste Seite 56 ist zu dem freien bzw. distalen Ende des Sensorkörpers 34 hin gewandt, während die entgegengesetzte zweite Seite 58 der Leiterplatte dem Gehäusekörper 38 zugewandt ist. Zwischen dem Sensorkörper 34 und dem Gehäusekörper 38 ist eine gedichtete Schnittstelle 60 ausgebildet, an welcher der erste Kanalabschnitt 52a mit dem zweiten Kanalabschnitt 52b verbunden ist.

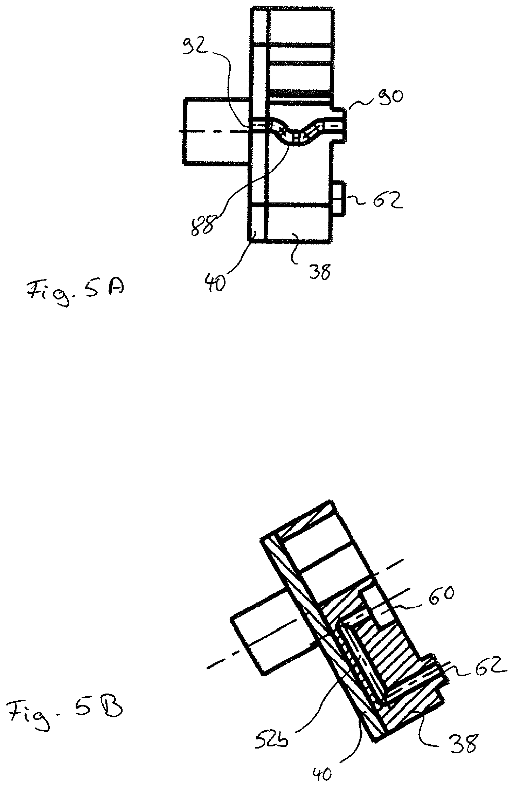

In dem Gehäusekörper 38 erstreckt sich der zweite Kanalabschnitt 52b, wie in Fig. 5B im Schnitt gezeigt ist, ausgehend von der Schnittstelle 60 zweimal um 90° gewinkelt in einem u-förmigen Verlauf zu einer Messelementaufnahme 62. Die Messelementaufnahme 62 ist radial versetzt zu der Schnittstelle 60, welche zentral angeordnet ist, gelegen. Der Gehäusekörper 38 mit dem Kanalabschnitt 52b ist vorzugsweise ebenfalls in einem generativen bzw. additiven Fertigungsverfahren, insbesondere aus Metall, wie beispielsweise rostfreiem Edelstahl, gefertigt.

Die Messelementaufnahme 62 kommt an einem ersten Messelement 64 zur Anlage. Das Messelement 64 ist an der Leiterplatte 48 angeordnet, wobei die Leiterplatte 48 eine Öffnung aufweist, durch welche die Messelementaufnahme 62 an dem Messelement 64, welches an der ersten Seite 56 der Leiterplatte angeordnet ist, zur Anlage kommen kann. Der Kanalabschnitt 52b des Fluidkanals 52 endet so an einer zweiten Messfläche 66 des Messelementes 64. Das Messelement 64 ist ein Differenzdruckmesselement. An der ersten Messfläche 68, welche an der ersten Seite 56 der Leiterplatte 48 gelegen ist, endet ein zweiter Fluidkanal 70, welcher ebenfalls in dem Sensorkörper 34 ausgebildet ist. Der zweite Fluidkanal 70 verbindet eine Messelementaufnahme 72, welche der ersten Messfläche 68 des Messelementes 64 gegenüberliegt mit einer Druckaufnahmeöffnung 74. Die Druckaufnahmeöffnung 74 ist beabstandet vom distalen Ende des Sensorkörpers 34 im Bereich des zweiten Abschnittes 44 gelegen. So ist die Druckaufnahmeöffnung 74 in axialer Richtung Y von der am distalen Ende gelegenen Druckaufnahmeöffnung 76, an welcher der erste Fluidkanal 52 mündet, beabstandet. So kann der Drucksensor 24, wenn er, wie in Fig. 2 gezeigt, in das Basisgehäuse 2 eingesetzt ist, am distalen Ende über die Druckaufnahmeöffnung 76 den Druck im Saugkanal 30 erfassen. Gleichzeitig ist die Druckaufnahmeöffnung 74 zu dem Ringraum 32 hin geöffnet, um den Ausgangsdruck des Pumpenaggregates zu erfassen.

Der zweite Fluidkanal 70 in dem zweiten Abschnitt 44 des Sensorkörpers 34 weist einen komplexen mehrfach gewinkelten, im Ergebnis im Wesentlichen mäanderförmigen Verlauf auf. Durch den streckenweise gewinkelten bzw. zick-zack-förmigen Verlauf werden Reflektionsflächen geschaffen, welche Druckwellen reflektieren. So kann eine Druckwelle, welche in die Druckaufnahmeöffnung 74 eintritt, nicht ungehindert die Messfläche 68 an dem Messelement 64 erreichen. Es findet vielmehr eine Dämpfung statt, welche das Messelement 64 vor Beschädigungen schützt. Im Verlauf des Fluidkanals 70 ist darüber hinaus eine Querschnittserweiterung in Form eines zylindrischen Expansionsraumes 78 vorgesehen, welcher ebenfalls zur Dämpfung zur Verringerung von Kavitation bei auftretenden Unterdrücken dient. Im hier gezeigten Beispiel zweigt von dem zweiten Fluidkanal 70 darüber hinaus noch ein Spülanschluss 80 ab, welcher insbesondere für die Entlüftung vorgesehen ist und ggf. im Betrieb verschlossen sein kann. Neben dem Expansionsraum 78 weist der zweite Fluidkanal 70 noch einen ringförmigen Expansionsraum 82 auf, welcher ebenfalls zur Dämpfung von auftretenden Druckschwankungen und zur Verminderung von Kavitation dienen kann. Die Kontur des zweiten Fluidkanals 70, welcher in diesem Ausführungsbeispiel der Druckseite des Pumpenaggregates zugeordnet ist, kann in seinem Verlauf und seiner Kontur durch das gewählte generative Fertigungsverfahren für den zweiten Abschnitt 44 sehr flexibel angepasst werden, da sich komplizierte Geometrien ohne Weiteres ausbilden lassen. Auch der erste Fluidkanal 52 könnte in dieser Weise mit Richtungsänderungen und/oder Querschnittsänderungen versehen sein.

Als generatives Fertigungsverfahren kann beispielsweise das selektive Lasersintern oder ein ähnliches Verfahren zur Anwendung kommen. Zusätzlich zu den genannten Fluidkanälen ist in dem zweiten Abschnitt 44 des Sensorkörpers 34 darüber hinaus in diesem Beispiel ein Freiraum 84 ausgebildet, um Material zu sparen und die Fertigungszeit zu verkürzen. Die Fertigungszeit wird ebenfalls durch den beschriebenen Hybridaufbau mit dem vorgefertigten ersten Abschnitt 42 verkürzt, da dieser konventionell vorgefertigt werden kann. Alternativ ist es jedoch denkbar, auch den ersten Abschnitt 42 in einem generativen Fertigungsverfahren vorzufertigen und beispielsweise vor dem Aufbringen des zweiten Abschnittes 44 nachzubearbeiten, beispielsweise außenumfänglich zu schleifen oder zu polieren, um den Strömungswiderstand in dem Ringraum 32 zu minimieren.

Wenn der Gehäusekörper 38 an den Sensorkörper 34 angesetzt ist, liegen die Messelementaufnahmen 62 und 72 einander so gegenüber, dass das Messelement 64 zwischen ihnen dichtend eingeklemmt wird und so von beiden Seiten zur Differenzdruckmessung mit Druck beaufschlagt werden kann. An der Leiterplatte 48 ist darüber hinaus ein zweites Messelement 86 angeordnet, welches dafür vorgesehen ist, den Umgebungsdruck zu erfassen. Dazu ist in dem Gehäusekörper 38, wie in Fig. 5A gezeigt, ein dritter Fluidkanal 88 ausgebildet. Der Fluidkanal 88 erstreckt sich ausgehend von einer Messelementaufnahme 90 zu einer Öffnung 92 in den Deckel 40. Der dritte Fluidkanal 88 verläuft dabei bogenförmig, so dass es nicht möglich ist, einen geraden Gegenstand durch die Öffnung 92 und durch den gesamten dritten Fluidkanal 88 hindurch bis zu dem Messelementaufnahme 90 einzuführen. Dadurch wird das Messelement 86 vor Beschädigungen geschützt. Der dritte Fluidkanal 88 bringt den Umgebungsdruck an das Messelement 86. Dazu liegt die Messelementaufnahme 90, welche eine Öffnung in der Leiterplatte 48 durchgreift, an einer Messfläche des Messelementes 86 an. Das Messelement 86 ist ebenfalls an der ersten Seite der Leiterplatte 48 angeordnet. Um eine Kraftentkopplung zwischen den Messelementen 64 und 86 zu erreichen, weist die Leiterplatte 48 eine Aussparung in Form eines sich radial erstreckenden Schlitzes 94 auf. Dieser erstreckt sich vom Außenumfang in radialer Richtung bis zu der Ausnehmung 54. Der Schlitz 94 ermöglicht eine gewisse Verformbarkeit der Leiterplatte 48. Neben den beschriebenen Messelementen 64 und 86 trägt die Leiterplatte 48 weitere elektronische Bauteile zur Messwerterfassung und Auswertung und stellt die Verbindung zu einem Anschlussstecker 96 des Drucksensors her.

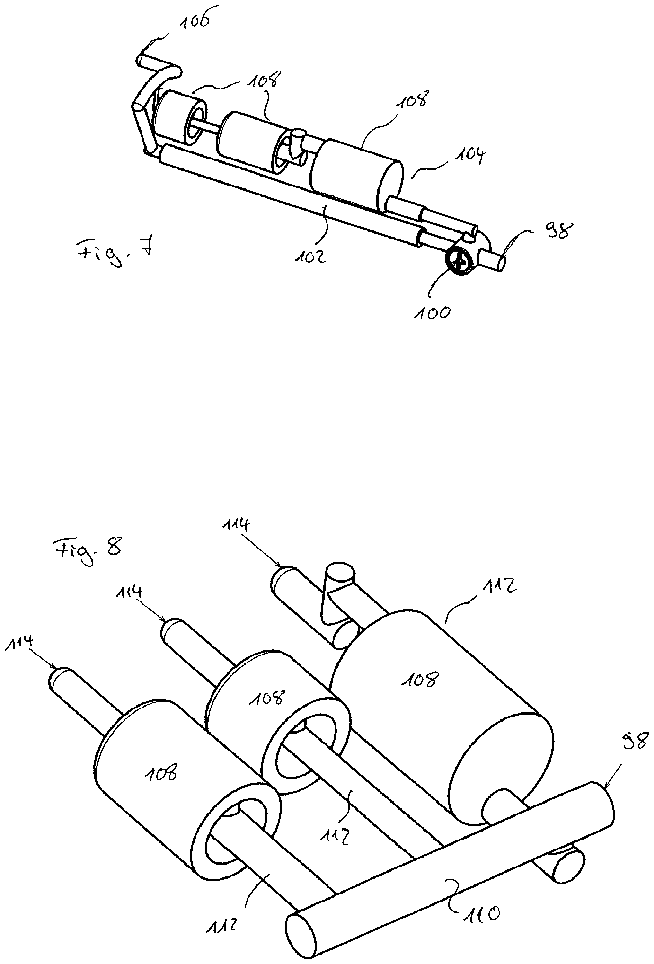

Wie beschrieben, ermöglicht die generative Fertigung der Struktur, in welcher die Fluidkanäle ausgebildet sind, unterschiedliche Verläufe bzw. Geometrien der Fluidkanäle, um verschiedene Dämpfungseigenschaften zu erzielen. Anhand der Fig. 7 bis 11 werden weitere mögliche Geometrien für derartige Fluidkanäle in einen Drucksensor beschrieben.

Bei dem Ausführungsbeispiel gemäß Fig. 7 gibt es eine Druckaufnahmeöffnung 98 von der ausgehend ein Fluidkanal zu einer Ventileinrichtung 100 verläuft, über welche die Verbindung wahlweise zu einem Fluidkanal 102 oder Fluidkanal 104 umschaltbar ist. Die Ventileinrichtung 100 kann ebenfalls in der generativ gefertigten Struktur mit ausgebildet werden, wobei vorzugsweise auch das bewegliche Ventilelement mit integral ausgebildet wird. Der Fluidkanal 102 verläuft relativ direkt mit drei Abwinklungen zu einer ersten Messelementaufnahme 106. Der zweite Fluidkanal 104 hat eine komplexere Geometrie mit drei Expansionsräumen 108 und mehreren Abwicklungen. Der Fluidkanal 104 mündet vor der Messelementaufnahme 106 wieder in den anderen Fluidkanal 102. Durch Umschalten der Ventileinrichtung 100 kann wahlweise der Fluidkanal 102 oder der Fluidkanal 104 zur Verbindung mit der Messelementaufnahme 106 genutzt werden. So kann der Sensor an verschiedene Anwendungsfälle angepasst werden.

In Fig. 8 ist eine weitere mögliche Ausgestaltung gezeigt. Dort ist ebenfalls eine Druckaufnahmeöffnung 98 vorgesehen, an welche sich ein gemeinsamer Kanalabschnitt 110 anschließt. Von diesem gemeinsamen Kanalabschnitt 110 zweigen drei Kanalabschnitte 112 zu drei Messelementaufnahmen 114 ab. Die drei Kanalabschnitte 112 weisen unterschiedliche Geometrien mit unterschiedlichen Abwinklungen und unterschiedlich geformten Expansionsräumen auf. Bei diesem Ausführungsbeispiel sind alle drei Messelementaufnahmen 114 über die drei Kanalabschnitte 112 ständig in Verbindung mit der Druckaufnahmeöffnung 98. Ein solcher Sensor kann dadurch an verschiedene Einsatzzwecke angepasst werden, dass wahlweise eines von drei Messelementen, welche an den Messelementaufnahmen 114 anliegen, aktiviert wird und die anderen zwei beispielsweise nicht genutzt werden. So kann eine rein elektronische Anpassung an verschiedene Einsatzmöglichkeiten erreicht werden.

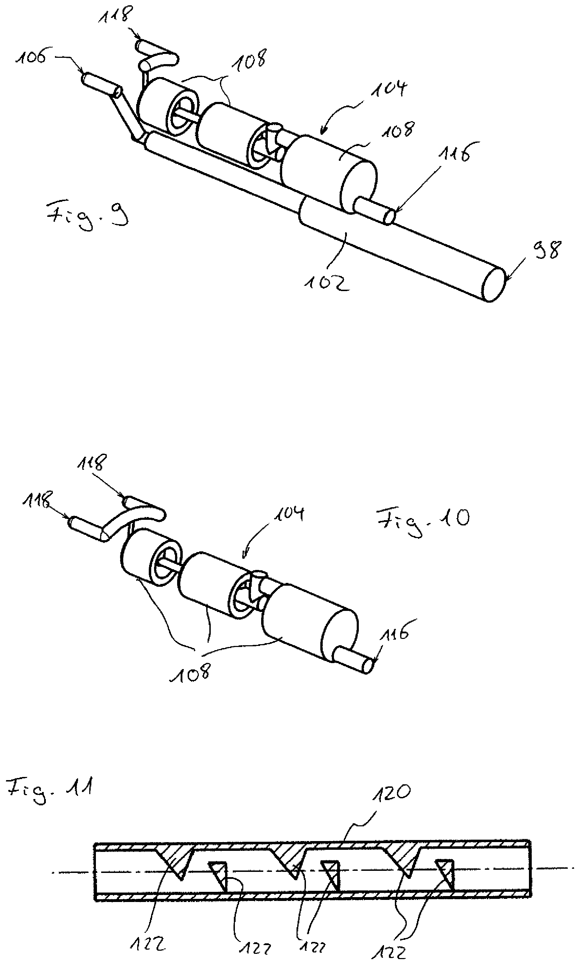

Fig. 9 zeigt ein Ausführungsbeispiel ähnlich dem Ausführungsbeispiel in Fig. 7 mit dem Unterschied, dass kein Ventilelement 100 vorgesehen ist, sondern der Fluidkanal 104, an einer zweiten Druckaufnahmeöffnung 116 endet. Ferner endet der Fluidkanal 104 an einer eigenen Messelementaufnahme 118. So können auch hier zwei Messelemente an den Messelementaufnahmen 106 und 118 angeordnet werden und es kann eine Anpassung des Sensors durch Aktivierung des jeweiligen Messelementes erreicht werden, sodass wahlweise für die Druckübertragung der Fluidkanal 102 oder der Fluidkanal 104 genutzt wird. Auch könnte ein solcher Sensor zur Differenzdruckmessung genutzt werden, indem die Druckaufnahmeöffnungen 98 und 116 an verschiedenen Stellen eines Aggregates platziert werden, wie es oben anhand von Fig. 2 beschrieben wurde. Für eine solche Differenzdruckmessung würden dann die Messelementaufnahmen 106 und 118 beide genutzt bzw. ähnlich dem ersten Ausführungsbeispiel mit zwei Seiten eines Differenzdruck-Messelementes in Kontakt gebracht.

Ein viertes mögliches Ausführungsbeispiel für einen Fluidkanal ist in Fig. 10 gezeigt. Dort entspricht der Fluidkanal im Wesentlichen dem Fluidkanal 104 gemäß Fig. 9. An dem der Druckaufnahmeöffnung 116 angewandten Ende verzweigt sich hier der Fluidkanal 104 zu zwei Messelementaufnahmen 118, sodass der Druck in dem Fluidkanal 104 gleichzeitig auf zwei Messelemente wirken kann, von denen beispielsweise ein Messelement zur Differenzdruckmessung und das andere für eine Absolutdruckmessung verwendet wird.

Allen vier Ausführungsbeispielen gemäß Fig. 7 bis 10 ist gemeinsam, dass neben unterschiedlich geformten Richtungsänderungen verschieden geformte Expansionsräume 108 zur Anwendung kommen können, wobei diese beispielsweise ringörmig wie der Expansionsraum 82 in Fig. 6 oder zylindrisch wie der Expansionsraum 78 in Fig. 6 ausgebildet sein können.

Fig. 11 zeigt eine weitere Geometrie eines Fluidkanals 120, welcher durch ein generatives Fertigungsverfahren ausgebildet werden kann. Dieser Fluidkanal 120 weist in seinem Inneren Vorsprünge 122 auf, welchen einen mäanderförmigen Verlauf des freien Durchganges des Strömungskanals 120 bewirken. Auch durch solch einen Kanalverlauf kann eine Dämpfung von Druckwellen bzw. Druckimpulsen erreicht werden.

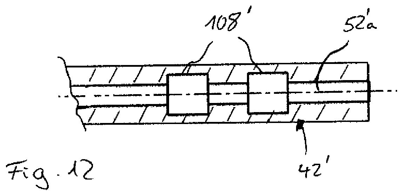

Fig. 12 zeigt ein weiteres Ausführungsbeispiel eines Fluidkanals, wie er in dem vorangehend beschriebenen Drucksensor zum Einsatz kommen kann. So zeigt Fig. 12 eine Variante der Ausgestaltung des ersten Fluidkanals 52 in dem Sensorkörper 34. Fig. 12 zeigt den ersten Abschnitt 42' eines Drucksensors, wie er in Fig. 6 im Schnitt dargestellt ist. In diesem Ausführungsbeispiel weist im Unterschied zu der Ausführungsform in Fig. 6 der Kanalabschnitt 52'a des ersten Fluidkanals 52 zwei Expansionsräume 108' auf. Diese bilden jeweils ein zusätzliches Fluidvolumen, welches vorteilhaft ist, um bei auftretenden Unterdrücken Kavitation im Bereich des Messelementes 64 zu verhindern. Es ist zu verstehen, dass derartige Kanaleigenschaften, welche zur Verhinderung von Kavitation dienen, im Falle des ersten Fluidkanals 52 auch in dem zweiten Kanalabschnitt 52b ausgebildet sein könnten. Im Übrigen ist zu verstehen, dass alle beschriebenen Fluidkanäle in ihrer geometrischen Gestaltung in beliebiger Kombination der vorangehend beschriebenen Gestaltungsmöglichkeiten gestaltet sein können, um angepasst an verschiedene Einsatzzwecke Druckimpulse bzw. Wasserschlag und/oder das Auftreten von Kavitation zu verringern.

### Bezugszeichenliste

- 2: Basisgehäuse
- 4: Einlassstutzen
- 6: Auslassstutzen
- 8: Laufräder
- 10: Leiterapparat
- 12: Welle
- 14: Kupplung
- 16: Antriebsmotor
- 18: inneres Gehäuse
- 20: äußeres Gehäuse
- 22: Kanal
- 24: Drucksensor
- 26: Öffnung
- 28: Öffnung
- 30: Saugkanal
- 32: Ringraum
- 34: Sensorkörper
- 36: Elektronikgehäuse
- 38: Gehäusekörper
- 40: Deckel
- 42, 42': erster Abschnitt des Sensorkörpers
- 44: zweiter Abschnitt des Sensorkörpers
- 46: Aufnahmeraum
- 48: Leiterplatte
- 50: Verbindungsebene
- 52: erster Fluidkanal
- 52a, 52'a: erster Kanalabschnitt
- 52b: zweiter Kanalabschnitt
- 54: Ausnehmung
- 56: erste Seite der Leiterplatte
- 58: zweite Seite der Leiterplatte
- 60: Schnittstelle
- 62: Messelementaufnahme
- 64: Messelement
- 66: zweite Messfläche
- 68: erste Messfläche
- 70: zweiter Fluidkanal
- 72: Messelementaufnahme
- 74, 76: Druckaufnahmeöffnung
- 78: Expansionsraum
- 80: Spülanschluss
- 82: Expansionsraum
- 84: Freiraum
- 86: Messelement
- 88: dritter Fluidkanal
- 90: Messelementaufnahme
- 92: Öffnung
- 94: Schlitz
- 96: Anschlussstecker
- 98: Druckaufnahmeöffnung
- 100: Ventileinrichtung
- 102, 104: Fluidkanäle
- 106: Messelementaufnahme
- 108, 108': Expansionsräume
- 110, 112: Kanalabschnitte
- 114: Messelementaufnahme
- 116: Druckaufnahmeöffnung
- 118: Messelementaufnahme
- 120: Fluidkanal
- 122: Vorsprünge
- Y: Längsachse des Sensors
- X: Drehachse des Pumpenaggregates

## Patentansprüche

1. Drucksensor mit einem Sensorgehäuse, **dadurch gekennzeichnet, dass** das Sensorgehäuse zumindest einen Sensorkörper (34) aufweist, welcher aus zumindest zwei Abschnitten (42, 44) ausgebildet ist, von welchem ein erster Abschnitt (42) ein vorgefertigtes Element ist, an welches ein zweiter Abschnitt (44) durch ein generatives Fertigungsverfahren (3D-Druck) einteilig angeformt ist.

2. Drucksensor nach Anspruch 1, **dadurch gekennzeichnet, dass** der erste (42) und der zweite Abschnitt (44) des Sensorkörpers aus Metall, insbesondere rostfreiem Stahl gefertigt sind.

3. Drucksensor nach Anspruch 1 oder 2, **dadurch gekennzeichnet, dass** der erste Abschnitt (42) und der zweite Abschnitt (44) des Sensorkörpers durch den generativen Fertigungsvorgang miteinander verschweißt sind.

4. Drucksensor nach einem der vorangehenden Ansprüche, **dadurch gekennzeichnet, dass** der Sensorkörper zum Einführen in einen Raum, in dessen Inneren ein Druck erfasst werden soll, ausgebildet ist.

5. Drucksensor nach einem der vorangehenden Ansprüche, **dadurch gekennzeichnet, dass** der erste Abschnitt (42) sich von dem zweiten Abschnitt (44) wegerstreckt und dass sich ein Kanalabschnitt (52a) eines ersten Fluidkanals durch den ersten Abschnitt erstreckt und zu einem dem zweiten Abschnitt (44) abgewandten Ende hin geöffnet ist.

6. Drucksensor nach einem der vorangehenden Ansprüche, **dadurch gekennzeichnet, dass** der Kanalabschnitt (52a) des ersten Fluidkanals (52) sich durch den zweiten Abschnitt (44) des Sensorkörpers (34) erstreckt.

7. Drucksensor nach einem der vorangehenden Ansprüche, **dadurch gekennzeichnet, dass** in dem zweiten Abschnitt (44) des Sensorkörpers (34) ein zweiter Fluidkanal (70) ausgebildet ist, welcher an einem ersten Ende in einer Druckaufnahmeöffnung (74) mündet.

8. Drucksensor nach Anspruch 7, **dadurch gekennzeichnet, dass** der zweite Fluidkanal (70) einen gewinkelten oder mäanderförmigen Verlauf hat und/oder zumindest eine Querschnittsänderung (78, 82) aufweist.

9. Drucksensor nach Anspruch 7 oder 8, **dadurch gekennzeichnet, dass** der zweite Fluidkanal (70) mit einem zweiten Ende in dem zweiten Abschnitt (44) des Sensorkörpers (34) an einer Messelementaufnahme (72) endet, an welcher ein Messelement (64) anliegt.

10. Drucksensor nach einem der Ansprüche 5 bis 9, **dadurch gekennzeichnet, dass** der Kanalabschnitt (52a) des ersten Fluidkanals (52) in dem zweiten Abschnitt (44) des Sensorkörpers (34) an einer Messelementaufnahme, an welcher ein Messelement anliegt, oder einer Schnittstelle (60) endet, an welcher ein zweiter Kanalabschnitt (52b) in einem weiteren Gehäuseteil (38) mit dem ersten Fluidkanal (52) in dem Sensorkörper verbunden (34) ist.

11. Drucksensor nach Anspruch 10, **dadurch gekennzeichnet, dass** der zweite Kanalabschnitt (52b) des ersten Fluidkanals (52) in einem mit dem Sensorkörper (34) verbundenen Gehäusekörper (38) ausgebildet ist.

12. Drucksensor nach einem der Ansprüche 5 bis 11, **dadurch gekennzeichnet, dass** der erste Fluidkanal (52) an einer Messelementaufnahme (62) endet, an welcher ein Messelement (64) anliegt.

13. Drucksensor nach Anspruch 12 und Anspruch 9, **dadurch gekennzeichnet, dass** die Messelementaufnahme (62) des ersten Fluidkanals (52) der Messelementaufnahme (72) des zweiten Fluidkanals (70) gegenüberliegt und an den beiden Messelementaufnahmen (62, 72) ein Differenzdruck-Messelement (64) gelegen ist.

14. Pumpenaggregat, **dadurch gekennzeichnet, dass** ein Drucksensor nach einem der vorangehenden Ansprüche in zumindest einem Strömungsweg (30, 32) des Pumpenaggregates zur Druckmessung angeordnet ist.

15. Verfahren zum Herstellen eines Drucksensors, insbesondere eines Drucksensors nach einem der Ansprüche, **dadurch gekennzeichnet, dass** ein erster Abschnitt (42) eines Sensorkörpers (34) als vorgefertigtes Bauteil bereitgestellt wird und anschließend ein zweiter Abschnitt (44) des Sensorkörpers (34) durch ein generatives Fertigungsverfahren (3D-Druck) direkt an dem ersten Abschnitt (42) generiert wird, wobei es zu einer Verbindung von dem zweiten (44) mit dem ersten Abschnitt (42) kommt.

16. Verfahren nach Anspruch 15, **dadurch gekennzeichnet, dass** das den ersten Abschnitt (42) bildende vorgefertigte Bauteil zuvor in einem urformenden und/oder spanenden Fertigungsprozess hergestellt wird.
